Europäisches Patentamt

European Patent Office

Office européen des brevets

(11) Veröffentlichungsnummer: **0 281 072**
**A2**

(12) # EUROPÄISCHE PATENTANMELDUNG

(21) Anmeldenummer: 88103074.6

(22) Anmeldetag: 01.03.88

(51) Int. Cl.⁴: **C09D 13/00**

(30) Priorität: 04.03.87 DE 3706977

(43) Veröffentlichungstag der Anmeldung:
07.09.88 Patentblatt 88/36

(84) Benannte Vertragsstaaten:
**DE FR GB**

(71) Anmelder: **Buchtal Gesellschaft mit beschränkter Haftung**
**Buchtalweg**
**D-8472 Schwarzenfeld(Opf.)(DE)**

(72) Erfinder: **Bard, Martin**
**Seminargasse 26**
**D-8450 Amberg(DE)**
Erfinder: **Rieger, Rosemarie**
**Stettiner Strasse 17**
**D-8633 Rödental(DE)**
Erfinder: **Petzenhauser, Isfried**
**Langer Rain 44**
**D-8633 Rödental(DE)**

(74) Vertreter: **Bockhorni, Josef, Dipl.-Ing. et al**
**Plinganserstrasse 18a Postfach 70 02 09**
**D-8000 München 70(DE)**

(54) **Verfahren zur Herstellung von Blei- und Farbstiften.**

(57) Bei einem Verfahren zur Herstellung von Bleistiften werden Mischungen von Graphit und bei niedrigen Temperaturen aus Mg-Salzen hergestelltes MgO durch $MgCl_2$-Lösungen härtbar gemacht und zu Minen oder Schreib-oder Zeichenstiften geformt.

EP 0 281 072 A2

## Verfahren zur Herstellung von Blei-und Farbstiften.

Die Erfindung betrifft ein Verfahren zur Herstellung von Blei-und Farbstiften.

Es ist bekannt, daß Bleistiftminen in der Weise hergestellt werden, daß ein feuchtes Graphit-Tongemisch, wobei der Tonanteil je nach gewünschter Härte zwischen 25 und 75 % beträgt, zu Minen verpreßt wird. Diese Minen werden getrocknet und zur Verfestigung bei Temperaturen um 1100°C gebrannt. Der Brand erfolgt entweder unter Schutzgas wie Stickstoff oder in Graphitschüttung, um ein Verbrennen des Graphits in den Minen zu verhindern. Die so hergestellten Minen können durch Tränken mit Haft-und Gleitmitteln in den Schreibeigenschaften verbessert werden, ehe sie zur Erhöhung der Bruchsicherheit und zur besseren Handhabung mit Holz umhüllt werden.

Weiterhin ist bekannt, daß Buntstiftminen, deren Farben einen Brand nicht aushalten würden, dadurch hergestellt werden können, daß Kunststoffe wie Cellulosederivate, z.B. Carboxymethylcellulose, Nitrocellulose, Ethyl und Benzylcellulose mit Farbstoffen und Gleitmitteln vermischt und verpreßt werden. Auch Kunststoffmonomere wie Styrol, Methacrylsäureester oder Thermoplaste wie Polyvinylchlorid und Polyvinylacetat werden als Bindephase für die Farbstoffe angegeben.

Die Qualität der Farbstiftminen mit organischer Bindung erreicht bei weitem nicht die Qualität der gebrannten Bleistiftminen.

Nach einem Vorschlag können Bleistiftminen bei niedrigeren Brenntemperaturen von unterhalb 550°C gebrannt werden, sofern zur Herstellung der Minen eine Mischung von Graphit mit Emailfritte und Quarzmehl in einem Verhältnis von etwa 1:2 bis 4:1 verwendet wird. Gegenüber der konventionellen Herstellung von Bleistiftminen kann hierdurch der Einsatz einer Inertgasatmosphäre oder einer Graphitschüttung entfallen, jedoch ist gleichwohl ein Brennvorgang mit den dafür erforderlichen Apparaturen und Brennstoffkosten notwendig.

Aufgabe der Erfindung ist es, die Qualität von Farbstiftminen zu verbessern und gleichzeitig den kostenintensiven Brand von Bleistiftminen zu vermeiden, ohne daß wesentliche Qualitätsverschlechterungen auftreten. Außerdem soll die Herstellung von Farbstift-und Bleistiftminen auf ein einheitliches Bindemittel beschränkt werden, was eine Rationalisierung erleichtert.

Diese Aufgabe wird erfindungsgemäß für die Herstellung von Bleistiften durch die im kennzeichnenden Teil des Anspruches 1 enthaltenen Merkmale und für die Herstellung von Farbstiften durch die im kennzeichnenden Teil des Anspruches 5 enthaltenen Merkmale gelöst, wobei zweckmäßige Weiterbildungen der Erfindung durch die in den Unteransprüchen enthaltenen Merkmale gekennzeichnet sind.

Überraschenderweise hat sich gezeigt, daß die Herstellung von Bleistift-und Farbstiftminen sowie Zeichenkreiden bei Raumtemperatur mit guten Schreibeigenschaften möglich ist, wenn als Bindemittel Zement und zwar insbesondere ein Magnesitbinder verwendet wird. Mischungen des schon seit 1857 bekannten Sorelzement mit Graphitpulver im Gewichtsverhältnis 1:1 bis 1:7 ergeben schon bei Raumtemperatur abbindende Gemische, so daß stranggepreßte oder gewalzte Minen aushärten. Diese Minen haben ausgezeichnete Schreibeigenschaften. Als Gleitmittel dient hierbei der Graphit. Als Bindemittel für Farbstifte eignet sich ebenfalls Sorelzement, wobei zweckmäßigerweise Gleitmittel wie insbesondere Talkum zugesetzt werden können. Es entstehen dann Minen gleicher Qualität wie bei Graphit-Sorelzementmischungen. Die Erfindung ist jedoch nicht auf $MgO$-$MgCl_2$-Sorelzement beschränkt, vielmehr können auch andere bekannte Sorelzementsorten wie $MgO$-$MgSO_4$ oder $CaO$-$CaCl_2$ verwendet werden.

Im folgenden werden Beispiele beschrieben, für die gebrannter Magnesit verwendet wurde, das durch fünfstündiges Glühen von $MgCO_3$ bei 780°C hergestellt wurde.

Beispiel 1:

4 g $MgO$ wurden mit 4 g Graphit innig vermischt, mit gesättigter $MgCl_2$-Lösung zu einer derben Paste verrührt und zu Stiften ausgewalzt. Nach 12 Stunden waren die Minen fest. Sie zeigten gute Schreibeigenschaften, waren gut anspitzbar, aber ziemlich hart.

Beispiel 2:

2 g $MgO$ und 10g Graphit wurden innig vermischt und mit 4 ml gesättigter $MgCl_2$-Lösung und 2 ml Ethanol angeteigt und wie bei Beispiel 1 weiterbehandelt. Es entstanden weiche Bleistiftminen.

Beispiel 3:

Noch weichere Bleistiftminen wurden erzeugt, indem 2 g $MgO$, 10 g Graphit und 3 g Talkum mit $MgCl_2$-Lösung vermischt, stranggepreßt und 12 Stunden gelagert wurden.

**Beispiel 4:**

2 g MgO, 10 g Talkum, und 2 g $Fe_2O_3$ wurden mit 30 ml Ethanol 1 Stunde in einer Kugelmühle vermahlen. Nach dem Trocknen wurde das Pulver mit 8 ml gesättigter $MgCl_2$-Lösung verrührt und stranggepreßt. Nach dem Aushärten waren braun - schreibende Minen, die an Ölkreide erinnerten, entstanden, die ausgezeichnete Schreib-und Zeicheneigenschaften hatten. Die Minen waren aber sehr weich.

**Beispiel 5:**

Ein gleiches Rezept wie bei Beispiel 3 mit dem Unterschied, daß auf 2 g MgO nur 6 g Talkum, verwendet wurde, ergab härtere Minen.

**Beispiel 6:**

Ein Rezept wie Beispiel 3, in dem das $Fe_2O_3$ durch gleiche Gewichtsteile $Cr_2O_3$ ersetzt wurde, ergab weiche grüne Minen.

**Beispiel 7:**

2 g MgO, 10 g Talkum und 0,1 g Methylenblau wurden mit 30 ml Ethanol 1 Stunde gemahlen, getrocknet und mit 5 ml $MgCl_2$-Lösung versetzt und zu Minen verpreßt. Es bildeten sich nach dem Aushärten blaue, weiche Schreibstifte. Zur Erhöhung der Bruchsicherheit wurden sie mit Holz umhüllt.

**Beispiel 8:**

Wie Beispiel 7, nur durch Ersatz von Methylenblau durch Eosin ergab rote Stifte.

**Ansprüche**

1. Verfahren zur herstellung Bleistiften, dadurch **gekennzeichnet**, daß Mischungen von Graphit und bei niedrigen Temperaturen aus Mg-Salzen hergestelltes MgO durch $MgCl_2$-Lösungen härtbar gemacht und zu Minen oder Schreib-oder Zeichenstiften geformt werden.

2. Verfahren nach Anspruch 1, dadurch **gekennzeichnet**, daß das Graphit:MgO-Verhältnis 1:1 bis 7:1 Gewichtsteile beträgt.

3. Verfahren nach Anspruch 1 oder 2, dadurch **gekennzeichnet**, daß zusätzlich Gleitmittel verwendet werden.

4. Verfahren nach Anspruch 3, dadurch **gekennzeichnet**, daß Talkum als Gleitmittel verwendet wird.

5. Verfahren zur Herstellung von Farbstiften, dadurch **gekennzeichnet**, daß MgO mit anorganischen oder organischen Farben zusammen mit Gleitmitteln und $MgCl_2$-Lösungen zu verpreßfähigen Pasten verarbeitet und zu Minen oder Zeichenstiften verformt werden.

6. Verfahren nach einem der vorhergehenden Ansprüche, dadurch **gekennzeichnet**, daß die Minen oder Stifte zur Erhöhung der Bruchsicherheit ummantelt werden.

7. Verfahren nach Anspruch 1 oder 5, dadurch **gekennzeichnet**, daß an Stelle von MgO - $MgCl_2$ -Sorelzement ein anderer der bekannten Sorelzementsorten wie MgO - $MgSO_4$ oder CaO - $CaCl_2$ verwendet werden.